# FASCICULE DE BREVET EUROPEEN

(11) **EP 1 756 441 B1**
(45) Date de publication et mention de la délivrance du brevet: **18.05.2011**
(21) Numéro de dépôt: 05776456.5
(22) Date de dépôt: 09.06.2005
(51) Int. Cl.: F16D 13/64

(54) **DISPOSITIF DE FRICTION POUR UN EMBRAYAGE, NOTAMMENT DE VEHICULE AUTOMOBILE**
REIBUNGSVORRICHTUNG FÜR EINE KUPPLUNG, IM BESONDEREN EINES KRAFTFAHRZEUGES
FRICTION DEVICE FOR A CLUTCH, PARTICULARLY OF A MOTOR VEHICLE

(30) Priorité: 14.06.2004 FR 0451174
(43) Date de publication de la demande: 28.02.2007
(73) Titulaire: Valeo Matériaux de Friction, 87020 Limoges (FR)
(72) Inventeur: TESSIER, Valérie, F-87350 Panazol (FR); VATIN, Géraud, F-87570 Rilhac Rancon (FR); PINEDA, Philippe, F-19100 Brive la Gaillarde (FR); DUMAS, Pierre, F-87800 Burgnac (FR)
(74) Mandataire: Benoit, Monique
(86) Numéro de dépôt international: PCT/FR2005/050432
(87) Numéro de publication internationale: WO 2006/000727

(56) Documents cités:
- DE-A- 1 575 983
- DE-A- 4 300 665
- DE-B- 1 210 686
- DE-C- 3 320 977
- FR-A- 2 255 499

## Description

La présente invention concerne un dispositif de friction pour un embrayage, notamment de véhicule automobile.

Un embrayage de véhicule automobile est destiné à transmettre un couple entre un volant moteur du véhicule automobile et un arbre d'entrée de boîte de vitesses. A cet effet, l'embrayage comporte un mécanisme, solidaire en rotation du volant moteur, et un dispositif de friction, solidaire en rotation de l'arbre de boîte de vitesses.

Le mécanisme comporte un plateau de pression et un plateau de réaction, destinés à coopérer avec des première et seconde garnitures de friction du dispositif de friction. Ces garnitures de friction sont portées par au moins un support, habituellement de forme générale de révolution.

Le dispositif de friction doit réaliser un compromis entre diverses contraintes techniques.

D'une part, il convient de limiter la masse et l'inertie du dispositif de friction.

A cet effet, on souhaite limiter les dimensions des garnitures de friction, par exemple l'épaisseur et la largeur radiale de ces garnitures de friction. On souhaite également éviter la présence de rivets de fixation des garnitures sur leur support en optant autant que possible pour le collage de ces garnitures sur leur support.

D'autre part, il convient de pouvoir activer l'embrayage de façon progressive.

A cet effet, on souhaite incorporer des moyens élastiques, en général une masse en élastomère, dans le dispositif de friction, afin d'assurer cette progressivité.

Des effets de cisaillement limitent les possibilités d'agencer la masse en élastomère entre une garniture et son support.

On a donc proposé dans l'état de la technique, notamment dans EP-A-0 419 329 et FR-A-2 255 499 l'état de la technique le plus pertinent un dispositif de friction pour un embrayage, notamment de véhicule automobile, du type comportant :
- des premier et second organes à garniture de friction, coaxiaux, écartés axialement, délimités par des faces de friction opposées, et
- des moyens de liaison des deux organes à garniture de friction solidarisés entre eux.

Dans un dispositif de friction de ce type, les organes à garniture de friction comportent chacun un support portant une garniture de friction. Dans ce cas, la masse en élastomère est intercalée entre les premier et second supports.

Plus particulièrement, chaque support de garniture décrit dans EP-A-0 419 329 comporte une partie périphérique de forme générale annulaire et une partie centrale de liaison avec l'autre support de garniture. Les parties centrales des supports sont jointives. Les parties périphériques des supports, écartées axialement entre-elles, sont reliées aux parties centrales par des parties intermédiaires convergeant depuis ces parties périphériques vers ces parties centrales.

De ce fait, lorsque les garnitures de friction sont serrées entre les plateaux de pression et de réaction, les parties périphériques des supports de garniture se déforment en divergeant vers les parties intermédiaires des supports relativement rigides axialement. Par conséquent, l'écartement entre les parties périphériques des supports de garniture ne varie pas uniformément radialement, lorsque les garnitures de friction sont serrées entre les plateaux de pression et de réaction.

Il en résulte que les garnitures de friction ne coopèrent pas de manière uniforme radialement avec les plateaux de pression et de réaction, ce qui nuit aux performances de l'embrayage.

L'invention a notamment pour but de proposer un dispositif de friction muni de supports de garniture de friction se déplaçant sensiblement parallèlement l'un par rapport à l'autre lorsqu'ils sont sollicités par les plateaux de pression et de réaction.

A cet effet, l'invention a pour objet un dispositif de friction du type précité, où le premier organe à garniture de friction a une forme générale annulaire, les moyens de liaison comprenant des languettes de liaison munies chacune d'une première extrémité de solidarisation avec un contour interne du premier organe à garniture de friction et d'une seconde extrémité de solidarisation avec le second organe à garniture de friction, les première et seconde extrémités de solidarisation présentant un décalage angulaire entre elles variable en fonction de l'écartement axial des deux organes à garniture de friction.

Ces languettes de liaison permettent aux organes à garniture de friction de se déplacer l'un par rapport à l'autre sensiblement par vissage selon un axe de rotation des supports (on rappellera qu'un vissage selon un axe est une combinaison simultanée d'une rotation selon cet axe et d'une translation parallèlement à ce même axe). Ainsi, lorsque l'écartement axial des organes à garniture de friction augmente, le décalage angulaire entre les extrémités de solidarisation de chaque languette diminue, et lorsque l'écartement axial des organes à garniture de friction diminue, le décalage angulaire entre les extrémités de solidarisation de chaque languette augmente.

Grâce à ces languettes de liaison, les organes à garniture de friction restent sensiblement parallèles entre eux lorsqu'ils sont sollicités par les plateaux de pression et de réaction.

Un dispositif de friction selon l'invention peut en outre comporter l'une ou plusieurs des caractéristiques suivantes :
- les languettes de liaison sont pliées de manière à ce que leurs première et seconde extrémités de solidarisation soient décalées axialement entre elles ;
- les languettes de liaison pliées sont portées par l'organe à garniture de friction destiné à coopérer avec le plateau de pression axialement ;
- la première extrémité de solidarisation de chaque languette de liaison est venue de matière avec le premier organe à garniture de friction ;
- la première extrémité de solidarisation de chaque languette de liaison est rapportée sur le premier organe à garniture de friction ;
- il est possible de définir sur chaque languette de liaison du support un secteur angulaire de sommet coïncidant sensiblement avec la seconde extrémité de solidarisation de cette languette et s'étendant jusqu'à un contour externe du support sans interruption de matière, le secteur angulaire formant un angle compris entre 10° et 35°, et où un axe perpendiculaire à un rayon passant par le centre du dispositif est compris dans ledit secteur angulaire ;
- les languettes de liaison sont disposées dans deux sens circonférentiels opposés, notamment sous la forme de V.
- le second organe à garniture de friction a une forme générale annulaire et comprend des languettes de liaison munies chacune d'une première extrémité de solidarisation avec un contour interne de ce second organe à garniture de friction et d'une seconde extrémité de solidarisation avec la seconde extrémité de solidarisation d'une languette de liaison correspondante du premier organe à garniture de friction, les première et seconde extrémités de solidarisation des languettes de liaison du second organe à garniture de friction présentant un décalage angulaire entre elles ;
- le dispositif de friction comporte des moyens élastiques d'entretoisement axial des premier et second organes à garniture de friction ;
- les moyens élastiques d'entretoisement comportent une masse en élastomère, de préférence de forme générale annulaire, agencée entre les premier et second organes à garniture de friction ;
- les moyens d'entretoisement comportent des languettes élastiques d'entretoisement munies chacune d'une première extrémité de solidarisation avec un des organes à garniture de friction et d'une seconde extrémité libre de contact avec l'autre des organes à garniture de friction, ces languettes d'entretoisement étant pliées de manière à ce que leurs première et seconde extrémités soient décalées axialement entre elles ;
- les languettes élastiques d'entretoisement sont reliées à un seul des organes à garniture de friction portant une garniture destinée à coopérer de préférence avec un plateau de pression mobile axialement ;
- le dispositif de friction comporte au moins deux languettes d'entretoisement présentant des décalages axiaux différents entre leurs première et seconde extrémités ;
- le dispositif de friction comporte au moins deux languettes d'entretoisement présentant des raideurs différentes ;
- le dispositif de friction comporte au moins deux languettes d'entretoisement, dites languettes appariées, reliées respectivement aux premier et second organes à garniture de friction ;
- les languettes d'entretoisement appariées sont sensiblement symétriques par rapport à un plan parallèle aux premier et second organes à garniture de friction ;
- les languettes d'entretoisement appariées sont sensiblement symétriques par rapport à un point ;
- le point de symétrie est un point de contact entre les languettes d'entretoisement appariées ;
- les languettes d'entretoisement appariées sont munies de surfaces de contact entre elles, la surface de contact d'une languette appariée étant en vis à vis de l'organe à garniture de friction auquel elle est reliée;
- les languettes d'entretoisement appariées sont munies de surfaces de contact entre elles, la surface de contact d'une languette appariée étant en vis à vis de l'organe à garniture de friction auquel elle n'est pas reliée;
- les languettes de liaisons et les languettes d'entretoisement s'étendent depuis leur première extrémité vers leur seconde extrémité respectivement dans des sens circulaires identiques ;
- le dispositif de friction comporte un dispositif de rattrapage d'usure des garnitures ;
- la distance entre les première et seconde extrémités de solidarisation de chaque languette de liaison est comprise entre 5 et 60mm, de préférence entre 20 et 40mm ;
- au moins un des organes à garniture de friction comporte un support portant une garniture de friction ;
- la garniture de friction est collée sur le support, ledit support est généralement en acier, mais il est également possible de le réaliser en matériau composite. Quand la garniture est collée sur un support, cette dernière est généralement sous la forme d'un anneau continu, mais elle peut également être constituée de segments annulaires disjoints, voire écartés les uns des autres ;
- au moins un organe à garniture de friction est formé en une seule et même pièce, par exemple moulée par injection.

Il convient de noter que les moyens de liaison des deux organes à garniture de friction peuvent permettre soit de les solidariser directement avec contact (on entend ainsi que l'extrémité de solidarisation est une extrémité de liaison), soit indirectement avec présence d'une pièce intermédiaire entre les deux organes à garniture de friction.

Selon un mode réalisation, la pièce intermédiaire est un flasque, notamment une rondelle de guidage solidaire en rotation avec l'arbre de boîte de vitesses.

On notera que, grâce à l'invention qui permet d'optimiser le contact des garnitures de friction avec les plateaux de pression et de réaction, il est possible de réduire la largeur radiale de ces garnitures davantage que dans l'état de la technique.

Ainsi, l'invention a également pour objet une garniture de friction pour dispositif de friction d'embrayage, notamment de véhicule automobile, de forme générale annulaire, le rapport largeur radiale de la garniture/diamètre extérieur de la garniture est inférieur à 0,10, voire même inférieur à 0.095.

L'invention sera mieux comprise à la lecture de la description qui va suivre, donnée uniquement à titre d'exemple et faite en se référant aux dessins annexés dans lesquels:
- la figure 1 est un éclaté d'un dispositif de friction selon un premier mode de réalisation de l'invention ;
- la figure 2 est une vue en perspective de moyens de liaison de deux supports du dispositif de friction selon le mode de réalisation de l'invention représenté sur la figure 1 ;
- la figure 3 est une vue partielle de face d'une première variante d'un support du dispositif de friction selon le premier mode de réalisation de l'invention ;
- la figure 4 est une vue de face d'une deuxième variante d'un support du dispositif de friction selon le premier mode de réalisation de l'invention ;
- la figure 5 est une vue partielle de face d'une troisième variante d'un support du dispositif de friction selon le premier mode de réalisation de l'invention ;
- la figure 6 est un éclaté d'un dispositif de friction selon un second mode de réalisation de l'invention ;
- les figures 7 à 12 sont des vues schématiques en coupe respectivement de deux supports du dispositif de friction représenté sur la figure 6 et de cinq variantes de ces supports.

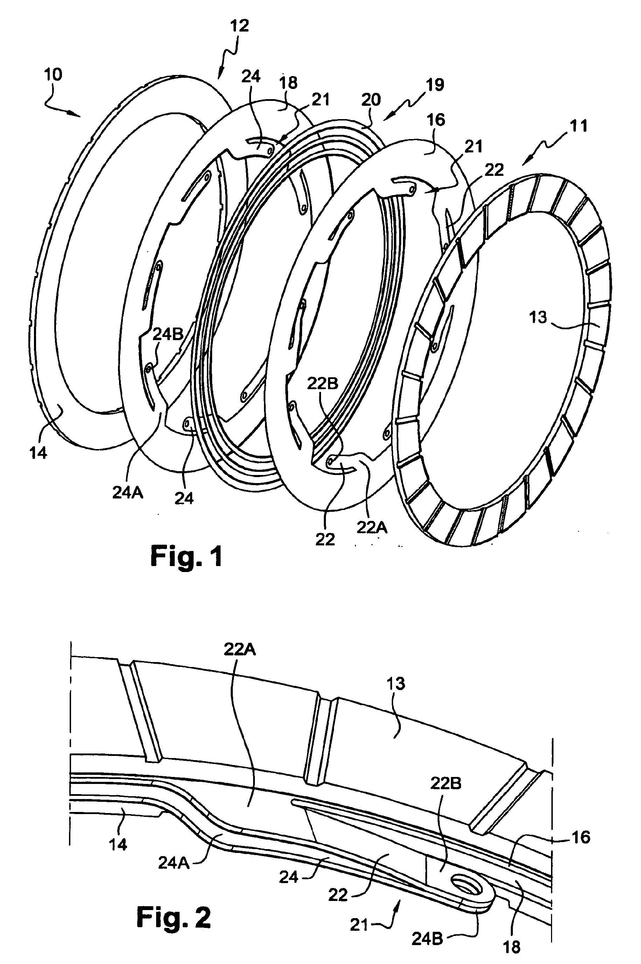

On a représenté sur la figure 1 un dispositif de friction pour un embrayage, notamment de véhicule automobile. Ce dispositif de friction est désigné par la référence générale 10.

Le dispositif de friction 10 comporte des premier 11 et second 12 organes à garniture de friction, sensiblement annulaires et coaxiaux.

Les premier 11 et second 12 organes à garniture de friction comportent respectivement des première 13 et seconde 14 garnitures de friction, délimitées par des faces de friction opposées, destinées respectivement à coopérer avec un plateau de pression et un plateau de réaction (non représentés) solidaires en rotation d'un volant moteur (non représenté).

Les premier 11 et second 12 organes à garniture de friction comportent en outre respectivement des premier 16 et second 18 supports, solidaires en rotation d'un arbre de boîte de vitesses (non représenté), sur lesquels sont fixées les première 12 et seconde 14 garnitures de friction, par exemple par collage. En variante, au moins un organe à garniture de friction est formé en une seule et même pièce, par exemple moulée par injection.

Les premier 16 et second 18 supports sont sensiblement annulaires, coaxiaux, et écartés axialement l'un par rapport à l'autre. En général, ces premier et second support sont en matériau composite ou en acier comportant de préférence 0.68% ou 0.75% de carbone (désigné respectivement XC68 et XC75 selon la norme française AFNOR).

On notera qu'afin d'assurer une efficacité constante des garnitures de friction, le dispositif de friction 10 comporte de préférence un dispositif de rattrapage d'usure (non représenté) des garnitures 13, 14.

Le dispositif de friction 10 comporte des moyens élastiques 19 d'entretoisement axial des premier 16 et second 18 supports, destinés à assurer la progressivité de l'embrayage. Selon le premier mode de réalisation de l'invention, les moyens élastiques d'entretoisement 19 comportent une masse 20 en élastomère comportant de préférence trois cordons de formes générales annulaires, sensiblement coaxiaux, agencés entre les premier 16 et second 18 supports.

Le dispositif de friction 10 comporte en outre des moyens 21 de liaison des premier 16 et second 18 supports entre eux, représentés plus en détail sur la figure 2.

Les moyens de liaison 21 comprennent des premières languettes de liaison 22, munies chacune d'une première extrémité 22A de solidarisation avec un contour interne du premier support 16, et des secondes languettes de liaison 24, munies chacune d'une première extrémité de solidarisation 24A avec un contour interne du second support 18.

Dans l'exemple représenté sur la figure 1, les premières extrémités de solidarisation 22A, 24A des languettes 22, 24 sont venues de matière avec le support 16, 18 correspondant.

Les languettes de liaison 22 du premier support 16 sont munies chacune d'une seconde extrémité 22B de solidarisation avec une seconde extrémité de solidarisation 24B de l'une des languettes de liaison 24 correspondante du second support 18.

On notera que les première 22A, 24A et seconde 22B, 24B extrémités de solidarisation de chaque languette de liaison 22, 24 présentent un décalage angulaire entre elles. Généralement, la distance entre les première 22A (respectivement 24A) et seconde 22B (respectivement 24B) extrémités de solidarisation de chaque languette de liaison 22 (respectivement 24) est comprise entre 5 et 60mm, de préférence entre 20 et 40mm.

Par ailleurs, les languettes de liaison 22 du premier support 16 sont pliées, de manière à ce que leurs première 22A et seconde 22B extrémités de solidarisation soient décalées axialement entre elles.

Ainsi, lorsque les premier 16 et second 18 supports se déplacent axialement l'un par rapport à l'autre, par exemple par pincement entre le plateau de pression et le plateau de réaction, les premier 16 et second 18 supports se déplacent, parallèlement l'un par rapport à l'autre, par vissage selon leur axe.

On notera donc que le décalage angulaire entre les première 22A et seconde 22B extrémités de solidarisation des languettes 22 est variable en fonction de l'écartement axial des deux supports 16, 18.

L'invention permettant un déplacement sensiblement parallèle des premier 16 et second 18 supports l'un par rapport à l'autre, le contact des garnitures de friction avec les plateaux de pression et de réaction est optimisé.

Ainsi, il est possible d'utiliser des garnitures de friction 13, 14 de dimensions réduites, de préférence telles que le rapport de leur largeur radiale sur leur diamètre extérieur soit inférieur à 0,10 et/ou telles que leur épaisseur soit limitée.

En variante, il est aussi possible d'utiliser des garnitures de friction 13, 14 de dimensions adaptées pour empiéter radialement sur la première extrémité de solidarisation 22A, 24A des languettes 22, 24. On renforce ainsi la liaison entre les languettes 22, 24 et leur support correspondant 16, 18 du fait de la liaison par collage entre les languettes 22, 24 et les parties des garnitures de friction 13, 14 empiétant sur ces languettes 22, 24.

Les languettes 22, 24 étant davantage sollicitées que les supports 16, 18, il peut être avantageux de réaliser ces languettes 22, 24 dans un autre acier que celui des supports 16, 18, et/ou de leur conférer une plus grande épaisseur, afin d'augmenter leur résistance à la traction et/ou au flambage.

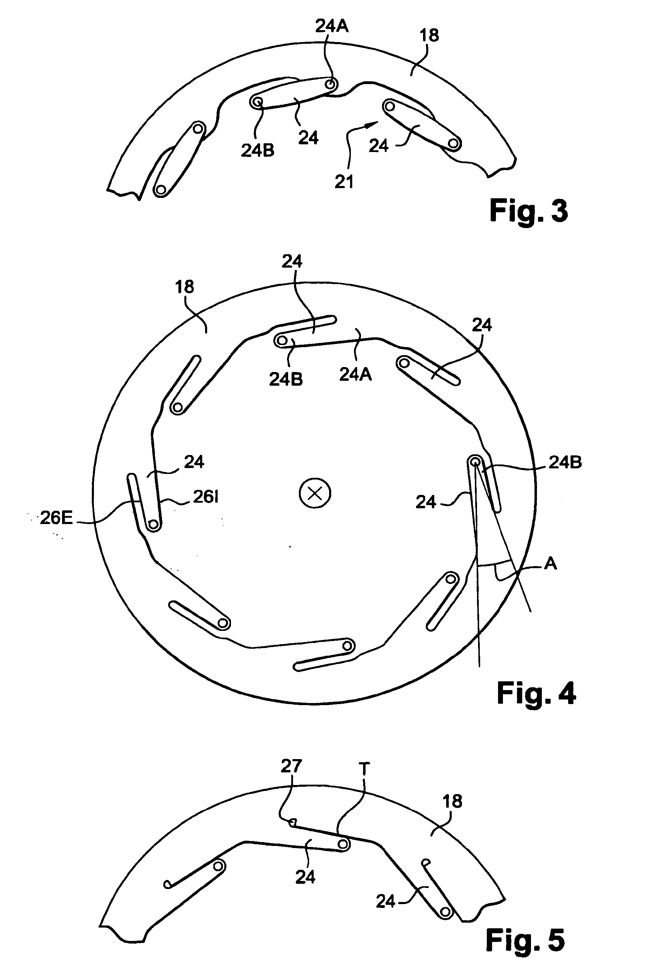

Ainsi, selon une première variante du premier mode de réalisation de l'invention, représentée sur la figure 3, la première extrémité de solidarisation 22A (respectivement 24A) de chaque languette de liaison 22 (respectivement 24) est rapportée, par exemple par rivetage, sur le support 16 (respectivement 18) correspondant.

Selon une deuxième variante du premier mode de réalisation, les languettes de liaison 24 du second support 18 ont l'aspect représenté sur la figure 4. Chaque languette de liaison 24 est délimitée par deux bords, radialement externe 26E et interne 261 respectivement, divergeant l'un par rapport à l'autre depuis la seconde extrémité 24B vers la première extrémité 24A de la languette de liaison 24.

On notera qu'il est possible de définir sur chaque languette de liaison 24 du second support 18 un secteur angulaire A, de sommet coïncidant sensiblement avec la seconde extrémité 24B de cette languette 24 et s'étendant jusqu'au contour interne du second support 18 sans interruption de matière, d'angle compris entre 10° et 35°. La continuité de matière dans ce secteur angulaire optimise la résistance des languettes de liaison 24 aux sollicitations subies par les premier 16 et second 18 supports lorsqu'ils transmettent un couple entre le volant moteur et l'arbre de boîte.

Les languettes de liaison 22 du premier support 16 sont similaires aux languettes de liaison 24 excepté qu'elles sont pliées, contrairement aux languettes de liaison 24.

Selon une troisième variante, représentée sur la figure 5, chaque languette de liaison 24 est séparée du reste du second support 18 par un trait de coupe T débouchant dans un oeillet 27 de répartition de contraintes. Les languettes de liaison 22 du premier support 16 sont similaires aux languettes de liaison 24 excepté qu'elles sont pliées, contrairement aux languettes de liaison 24.

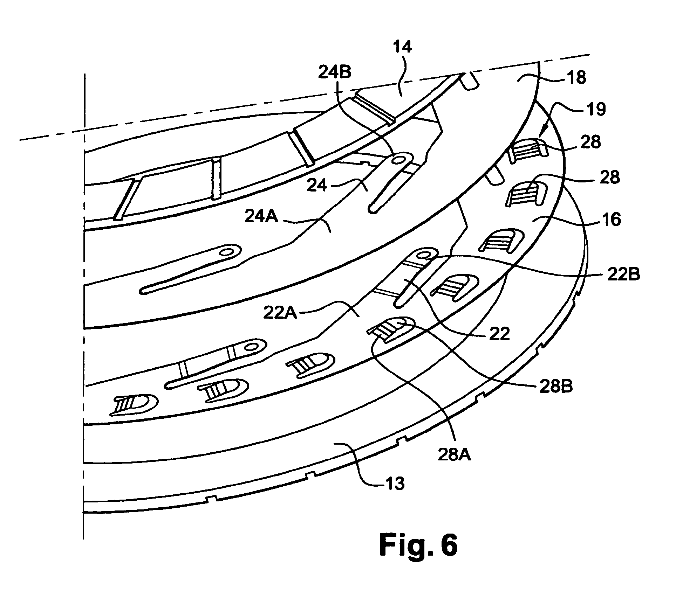

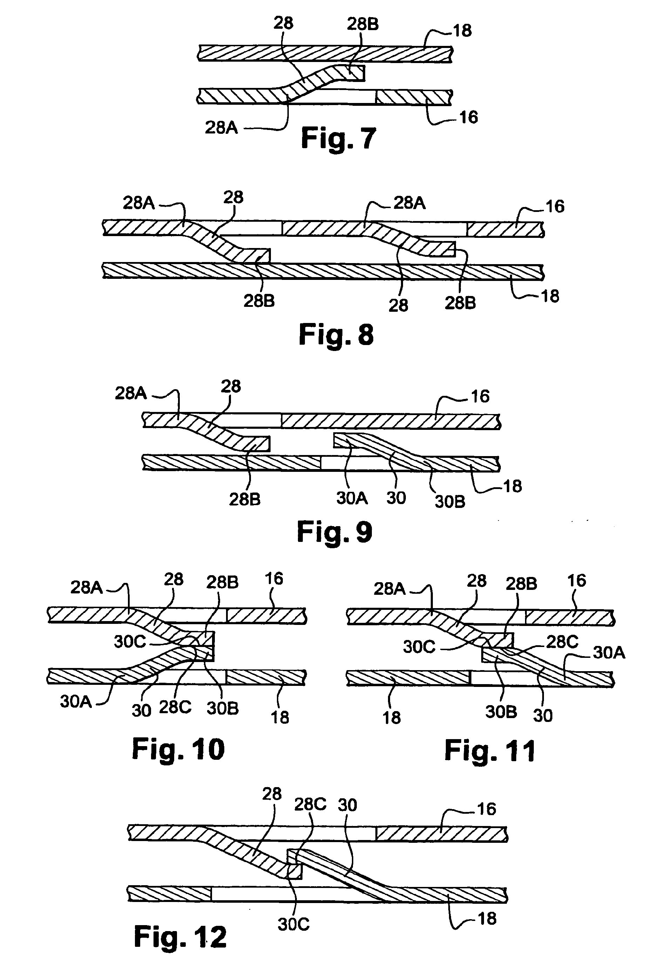

On a représenté sur les figures 6 et 7 un dispositif de friction selon un second mode de réalisation de l'invention. Sur ces figures, les éléments analogues à ceux des figures précédentes sont désignés par des références identiques.

Selon ce second mode de réalisation, les moyens d'entretoisement 19 comportent des languettes élastiques d'entretoisement 28. Ces languettes d'entretoisement 28 sont découpées dans le support 16 et de préférence disposées tangentiellement à un cercle coaxial au support 16. En variante, les languettes d'entretoisement peuvent être disposées radialement.

Les languettes élastiques d'entretoisement 28 sont représentées plus en détail sur la figure 7.

Chaque languette élastique d'entretoisement 28 est munie d'une première extrémité 28A de liaison avec le premier support 16 et d'une seconde extrémité libre 28B. Les languettes d'entretoisement 28 sont pliées de façon que leurs première 28A et seconde 28B extrémités soient décalées axialement entre elles. Ainsi, la seconde extrémité 28B de chaque languette d'entretoisement 28 est susceptible de venir en contact avec le second support 18, notamment lorsque les premier 16 et second 18 supports se déplacent l'un vers l'autre, de manière à assurer la progressivité de l'embrayage.

De préférence, les languettes de liaison 22 et les languettes d'entretoisement 28 s'étendent chacune depuis leur première extrémité 22A, 28A vers leur seconde extrémité 22A, 28A dans des sens circulaires respectifs identiques. Ainsi, lorsque les premier 16 et second 18 supports se déplacent axialement l'un par rapport à l'autre, par vissage; les extrémités libres 28B des languettes d'entretoisement 28 qui se déforment restent sensiblement fixes par rapport au second support 18.

De préférence également, le support 16 muni des languettes élastiques d'entretoisement 28 est le support portant la garniture 12 destinée à coopérer avec le plateau de pression.

Selon une variante représentée sur la figure 8, le support 16 comporte au moins deux languettes d'entretoisement 28 présentant des décalages axiaux différents entre leurs premières 28A et secondes 28B extrémités. Ces languettes 28 peuvent en outre présenter des raideurs différentes. De cette manière, il est possible d'optimiser la progressivité de l'embrayage.

Certaines languettes d'entretoisement 28 peuvent être également liées au support opposé 18, par exemple par collage, soudage ou encliquetage. Ces languettes d'entretoisement 28, liées aux deux supports 16, 18, permettent, en plus de leur fonction de progressivité, de limiter l'écartement de ces supports 16, 18.

Les figures 9 à 12 représentent quatre autres variantes du second mode de réalisation de l'invention, dans lesquelles les premier 16 et second 18 supports sont munis chacun d'au moins une languette d'entretoisement 28, 30. Ces languettes 28, 30, dites appariées, sont reliées respectivement aux premier 16 et second 18 supports.

Selon la variante représentée sur la figure 9, les extrémités libres des languettes d'entretoisement appariées 28, 30 s'étendent depuis leur première extrémité 28A, 30A vers leur seconde extrémité libre 28B, 30B respectivement dans des sens circulaires opposés.

Selon la variante représentée sur la figure 10, les extrémités libres des languettes appariées 28, 30 sont munies de surfaces de contact entre elles 28C, 30C, telles que la surface de contact d'une languette appariée 28, 30 soit en vis-à-vis du support 18, 16 auquel elle n'est pas reliée. Les languettes d'entretoisement appariées 28, 30 sont sensiblement symétriques par rapport à un plan parallèle aux premier 16 et second 18 supports.

Selon la variante représentée sur la figure 11, les extrémités libres des languettes appariées 28, 30 sont également munies de surfaces de contact entre elles 28C, 30C telles que la surface de contact d'une languette appariée 28, 30 soit en vis-à-vis du support 18, 16 auquel elle n'est pas reliée. Toutefois, selon cette variante, les languettes d'entretoisement 28 et 30 sont sensiblement symétriques par rapport à un point de contact entre les languettes d'entretoisement appariées.

Selon la variante représentée sur la figure 12, les extrémités libres des languettes d'entretoisement appariées 28, 30 sont munies de surfaces de contact entre elles 28C, 30C telles que la surface de contact d'une languette appariée 28, 30 soit en vis-à-vis du support 16, 18 auquel elle est reliée. Ainsi, les languettes appariées 28, 30 coopèrent entre elles de façon à limiter l'écartement des supports 16 et 18.

Quatre exemples de réalisation selon l'invention ont été fabriquées et ont permis d'obtenir de bien bonnes résistances à la centrifigation.

Les garnitures sont collées sur un support métallique d'environ 0.3mm en acier XC 68. On évite ainsi la présence de rivet de fixation. Les dimensions des garnitures sont reportées dans le tableau suivant :

| Diamètre externe (mm) | Diamètre interne (mm) | Largeur radiale de la garniture (mm) | Largeur radiale de garniture/diamètre externe |
|---|---|---|---|
| 180 | 145 | 17.5 | 0.097 |
| 180 | 148 | 16 | 0.089 |
| 215 | 175 | 20 | 0.093 |
| 215 | 190 | 22.5 | 0.096 |

On constate en outre que les dispositifs de friction ainsi réalisés ont une faible inertie globale.

## Revendications

1. Dispositif de friction (10) pour un embrayage, notamment de véhicule automobile, du type comportant :
- des premier (11) et second (12) organes à garniture de friction, coaxiaux, écartés axialement, délimités par des faces de friction opposées, et
- des moyens (21) de liaison des deux organes à garniture de friction (11, 12) solidarisés entre eux,
**caractérisé en ce que** le premier organe à garnitures de friction (11) a une forme générale annulaire, les moyens de liaison (21) comprenant des languettes de liaison (22) munies chacune d'une première extrémité (22A) de solidarisation avec un contour interne du premier organe à garniture de friction (11) et d'une seconde extrémité (22B) de solidarisation avec le second organe à garniture de friction (12), les première (22A) et seconde (228) extrémités de solidarisation présentant un décalage angulaire entre elles variable en fonction de l'écartement axial des deux organes à garniture de friction (11, 12).

2. Dispositif de friction (10) selon la revendication 1, **caractérisé en ce que** les languettes de liaison (22) sont pliées de manière à ce que leurs première (22A) et seconde (22B) extrémités de solidarisation soient décalées axialement entre elles.

3. Dispositif de friction (10) selon la revendication 2, **caractérisé en ce que** les languettes de liaison pliées (22) sont portées par l'organe à garniture de friction destiné à coopérer avec le plateau de pression axialement.

4. Dispositif de friction (10) selon l'une des revendications 1 à 3, **caractérisé en ce que** la première extrémité de solidarisation (22A) de chaque languette de liaison (22) est venue de matière avec le premier organe à garniture de friction (11).

5. Dispositif de friction (10) selon l'une des revendications 1 à 3, **caractérisé en ce que** la première extrémité de solidarisation (22A) de chaque languette de liaison (22) est rapportée sur le premier organe à garniture de friction (11).

6. Dispositif de friction (10) selon l'une quelconque des revendications précédentes, **caractérisé en ce qu'**il est possible de définir sur chaque languette de liaison (22, 24) du support (16, 18) un secteur angulaire (A) de sommet coïncidant sensiblement avec la seconde extrémité de solidarisation (22B, 24B) de cette languette (22, 24) et s'étendant jusqu'à un contour externe du support (16, 18) sans interruption de matière, le secteur angulaire formant un angle compris entre 10° et 35° et où un axe perpendiculaire à un rayon passant par le centre du dispositif est compris dans ledit secteur angulaire.

7. Dispositif de friction (10) selon l'une quelconque des revendications précédentes, **caractérisé en ce que** le second organe à garniture de friction (12) a une forme générale annulaire et comprend des languettes de liaison (24) munies chacune d'une première extrémité (24A) de solidarisation avec un contour interne de ce second organe à garniture de friction (12) et d'une seconde extrémité (24B) de solidarisation avec la seconde extrémité de solidarisation (22B) d'une languette de liaison correspondante du premier organe à garniture de friction (11), les première (24A) et seconde (24B) extrémités de solidarisation des languettes de liaison (24) du second organe à garniture de friction (12) présentant un décalage angulaire entre elles.

8. Dispositif de friction (10) selon l'une quelconque des revendications précédentes, **caractérisé en ce qu'**il comporte des moyens élastiques (19) d'entretoisement axial des premier (11) et second (12) organes à garniture de friction.

9. Dispositif de friction (10) selon la revendication 8, **caractérisé en ce que** les moyens élastiques d'entretoisement (19) comportent une masse (20) en élastomère, de préférence de forme générale annulaire, agencée entre les premier (11) et second (12) organes à garniture de friction.

10. Dispositif de friction (10) selon la revendication 8, **caractérisé en ce que** les moyens d'entretoisement (19) comportent des languettes élastiques d'entretoisement (28) munies chacune d'une première extrémité (28A) de liaison avec un des organes à garniture de friction (11) et d'une seconde extrémité (28B) libre de contact avec l'autre des organes à garniture de friction (12), ces languettes d'entretoisement (28) étant pliées de manière à ce que leurs première (28A) et seconde (28B) extrémités soient décalées axialement entre elles.

11. Dispositif de friction (10) selon la revendication 10, **caractérisé en ce que** les languettes élastiques d'entretoisement (28) sont reliées à un seul des organes à garniture de friction (11) portant une garniture destinée à coopérer de préférence avec un plateau de pression mobile axialement.

12. Dispositif de friction (10) selon la revendication 10 ou 11, **caractérisé en ce qu'**il comporte au moins deux languettes d'entretoisement (28) présentant des décalages axiaux différents entre leurs première (28A) et seconde (28B) extrémité

13. Dispositif de friction (10) selon la revendication 10 ou 11, **caractérisé en ce qu'**il comporte au moins deux languettes d'entretoisement (28) présentant des raideurs différentes.

14. Dispositif de friction (10) selon la revendication 10, **caractérisé en ce qu'**il comporte au moins deux languettes d'entretoisement (28, 30), dites languettes appariées, reliées respectivement aux premier (11) et second (12) organes à garniture de friction.

15. Dispositif de friction (10) selon la revendication 14, **caractérisé en ce que** les languettes d'entretoisement appariées (28, 30) sont sensiblement symétriques par rapport à un plan parallèle aux premier (11) et second (12) organes à garniture de friction.

16. Dispositif de friction (10) selon la revendication 14, **caractérisé en ce que** les languettes d'entretoisement appariées (28, 30) sont sensiblement symétriques par rapport à un point.

17. Dispositif de friction (10) selon la revendication 16, **caractérisé en ce que** le point de symétrie est un point de contact entre les languettes d'entretoisement appariées (28, 30).

18. Dispositif de friction (10) selon la revendication 14, **caractérisé en ce que** les languettes d'entretoisement appariées (28, 30) sont munies de surfaces de contact entre elles (28C, 30C), la surface de contact (28C, 30C) d'une languette appariée (28. 30) étant en vis à vis de l'organe à garniture de friction (11, 12) auquel elle est reliée.

19. Dispositif de friction (10) selon la revendication 14, **caractérisé en ce que** les languettes d'entretoisement appariées (28, 30) sont munies de surfaces de contact (28C, 30C) entre elles, la surface de contact (28C, 30C) d'une languette appariée (28, 30) étant en vis à vis de l'organe à garniture de friction (11, 12) auquel elle n'est pas reliée.

20. Dispositif de friction (10) selon l'une quelconque des revendications 10 à 19, **caractérisé en ce que** les languettes de liaisons (22) et les languettes d'entretoisement (28) s'étendent depuis leur première extrémité (22A, 28A) vers leur seconde extrémité (22B, 28B) respectivement dans des sens circulaires identiques.

21. Dispositif de friction (10) selon l'une quelconque des revendications précédentes, **caractérisé en ce qu'**il comporte un dispositif de rattrapage d'usure des garnitures (13, 14).

22. Dispositif de friction (10) selon l'une quelconque des revendications précédentes, **caractérisé en ce que** la distance entre les première (22A ; 24A) et seconde (22B ; 24B) extrémités de solidarisation de chaque languette de liaison (22 ; 24) est comprise entre 5 et 60mm, de préférence entre 20 et 40mm.

23. Dispositif de friction (10) selon l'une quelconque des revendications 1 à 22, **caractérisé en ce qu'**au moins un des organes à garniture de friction (11, 12) comporte un support (16,18) portant une garniture de friction (13, 14).

24. Dispositif de friction (10) selon la revendication 23, **caractérisé en ce que** la garniture de friction (13, 14) est collée sur le support (16,18).

25. Dispositif de friction (10) selon l'une quelconque des revendications 1 à 22, **caractérisé en ce qu'**au moins un organe à garniture de friction est formé en une seule et même pièce, par exemple moulée par injection.

26. Dispositif de friction (10) selon l'une quelconque des revendications 23 et 24, **caractérisé en ce que** la garniture de friction (13, 14) est de forme générale annulaires et **en ce que** le rapport largeur radiale de la garniture/diamètre extérieur de la garniture (13, 14) est inférieur à 0,10. voire même inférieur à 0.095.

## Claims

1. A friction device (10) for a clutch, in particular for a motor vehicle, of the type comprising:
- first (11) and second (12) friction lining members, coaxial, separated axially, delimited by opposite friction faces, and
- means (21) of connecting the two friction lining members (11, 12) fixed together,
**characterised in that** the first friction lining member (11) has a general annular shape, the connection means (21) comprising connection tongues (22) each provided with a first end (22A) for fixing to an internal contour of the first friction lining member (11) and a second end (22A) for fixing to the second friction lining member (12), the first (22A) and second (22B) fixing ends having an angular offset between them as a function of the axial separation of the two friction lining members (11, 12).

2. Friction device (10) according to claim 1, **characterised in that** the connecting tongues (22) are bent so that their first (22A) and second (22B) fixing ends are mutually offset axially.

3. Friction device (10) according to claim 2, **characterised in that** the bent connecting tongues (22) are carried by the friction lining member intended to cooperate with the pressure plate axially.

4. Friction device (10) according to one of claims 1 to 3, **characterised in that** the first connecting end (22A) of each connecting tongue (22) is made in one piece with the first friction lining member (11).

5. Friction device (10) according to claims 1 to 3, **characterised in that** the first fixing end (22A) of each connecting tongue (22) is attached to the first friction lining member (11).

6. Friction device (10) according to any one of the preceding claims, **characterised in that** it is possible to define, on each connecting tongue (22, 24) of the support (16, 18), a top angular sector (A) coinciding substantially with the second fixing end (22B, 24B) of this tongue (22, 24) and extending as far as an external contour of the support (16, 18) without any interruption of material, the angular sector forming an angle between 10° and 35°, and where an axis perpendicular to a radius passing through the centre of the device is included in the said angular sector.

7. Friction device (10) according to any one of the preceding claims, **characterised in that** the second friction lining member (12) has a generally annular shape and comprises connecting tongues (24) each provided with a first end (24A) for fixing to an internal contour of this second friction lining member (12) and a second end (24B) for fixing to the second fixing end (22B) of a corresponding connecting tongue of the first friction lining member (11), the first (24A) and second (24B) fixing ends of the connecting tongues (24) of the second friction lining member (12) having a mutual angular offset.

8. Friction device (10) according to any one of the preceding claims, **characterised in that** it comprises elastic means (19) for axial bracing of the first (11) and second (12) friction lining members.

9. Friction device (10) according to claim 8, **characterised in that** the elastic bracing means (19) comprise an elastomer mass (20), preferably generally annular in shape, arranged between the first (11) and second (12) friction lining members.

10. Friction device (10) according to claim 8, **characterised in that** the bracing means (19) comprise elastic bracing tongues (28) each provided with a first end (28A) for fixing to one of the friction lining members (11) and a second end (28B) free from contact with the other one of the friction lining members (12), these bracing tongues (28) being bent so that their first (28A) and second (28B) ends are mutually offset axially.

11. Friction device (10) according to claim 10, **characterised in that** the elastic bracing tongues (28) are connected to only one of the friction lining members (11) carrying a lining intended to cooperate preferably with an axially movable pressure plate.

12. Friction device (10) according to claim 10 or 11, **characterised in that** the friction device comprises at least two bracing tongues (28) having different axial offsets between their first (28A) and second (28B) ends.

13. Friction device (10) according to claim 10 or 11, **characterised in that** the friction device comprises at least two bracing tongues (28) having different stiffnesses.

14. Friction device (10) according to claim 10, **characterised in that** it comprises at least one two bracing tongues (28, 30), referred to as matched tongues, connected respectively to the first (11) and second (12) friction lining members.

15. Friction device (10) according to claim 14, **characterised in that** the matched bracing tongues (28, 30) are substantially symmetrical with respect to a plane parallel to the first (11) and second (12) friction lining members.

16. Friction device (10) according to claim 14, **characterised in that** the matched bracing tongues (28, 30) are substantially symmetrical with respect to a point.

17. Friction device (10) according to claim 16, **characterised in that** the symmetry point is a point of contact between the matched bracing tongues (28, 30).

18. Friction device (10) according to claim 14, **characterised in that** the matched bracing tongues (28, 30) are provided mutual contact surfaces (28C, 30C), the contact surface (28C, 30C) on one matched tongue (28, 30) being opposite the friction lining member (11, 12) to which it is connected.

19. Friction device (10) according to claim 14, **characterised in that** the matched bracing tongues (28, 30) are provided with mutual contact surfaces (28C, 30C), the contact surface (28C, 30C) on one matched tongue (28, 30) being opposite the friction lining (11, 12) to which it is not connected.

20. Friction device (10) according to any one of claims 10 to 19, **characterised in that** the connecting tongues (22) and the bracing tongues (28) extend from their first end (22A, 28A) to their second end (22B, 28B) respectively in identical circular directions.

21. Friction device (10) according to any one of the preceding claims, **characterised in that** it comprises a device for taking up wear on the linings (13, 14).

22. Friction device (10) according to any one of the preceding claims, **characterised in that** the distance between the first (22A; 24A) and second (22B; 24B) connecting ends on each connecting tongue (22; 24) is between 5 and 60 mm, preferably between 20 and 40 mm.

23. Friction device (10) according to any one of claims 1 to 22, **characterised in that** at least one of the friction lining members (11, 12) comprises a support (16, 18) carrying a friction lining (13, 14).

24. Friction device (10) according to claim 23, **characterised in that** the friction lining (13, 14) is adhesively bonded to the support (16, 18).

25. Friction device (10) according to any one of claims 1 to 22, **characterised in that** at least one friction lining member is formed in a single piece, for example injection moulded.

26. Friction device (10) according to any one of claims 23 and 24, **characterised in that** the friction lining (13, 14) is annular in shape overall, and **in that** the ratio of the radial width of the lining to the outside diameter of the lining (13, 14) is less than 0.10, or even less than 0.095.

## Patentansprüche

1. Reibungsvorrichtung (10) für eine Kupplung, insbesondere eines Kraftfahrzeugs, umfassend:
- koaxiale, axial voneinander entfernte erste (11) und zweite (12) Reibbelagorgane, die durch entgegengesetzte Reibflächen begrenzt sind, und
- Mittel (21) zur Verbindung der beiden aneinander befestigten Reibbelagorgane (11, 12),
**dadurch gekennzeichnet, dass** das erste Reibbelagorgan (11) eine allgemein ringförmige Form hat, wobei die Verbindungsmittel (21) Verbindungslaschen (22) umfassen, die jeweils mit einem ersten Ende (22A) zur Befestigung an einer inneren Kontur des ersten Reibbelagorgans (11) und mit einem zweiten Ende (22B) zur Befestigung an dem zweiten Reibbelagorgan (12) versehen sind, wobei die ersten (22A) und zweiten (22B) Befestigungsenden zwischen sich einen Winkelversatz aufweisen, der in Abhängigkeit von der axialen Entfernung der beiden Reibbelagorgane (11, 12) variiert.

2. Reibungsvorrichtung (10) nach Anspruch 1, **dadurch gekennzeichnet, dass** die Verbindungslaschen (22) derart gebogen sind, dass ihre ersten (22A) und zweiten (22B) Befestigungsenden zueinander axial versetzt sind.

3. Reibungsvorrichtung (10) nach Anspruch 2, **dadurch gekennzeichnet, dass** die gebogenen Verbindungslaschen (22) von dem Reibbelagorgan getragen werden, welches dazu bestimmt ist, axial mit der Druckplatte zusammenzuwirken.

4. Reibungsvorrichtung (10) nach einem der Ansprüche 1 bis 3, **dadurch gekennzeichnet, dass** das erste Befestigungsende (22A) von jeder Verbindungslasche (22) einstückig mit dem ersten Reibbelagorgan (11) ausgeführt ist.

5. Reibungsvorrichtung (10) nach einem der Ansprüche 1 bis 3, **dadurch gekennzeichnet, dass** das erste Befestigungsende (22A) von jeder Verbindungslasche (22) auf dem ersten Reibbelagorgan (11) aufgebracht ist.

6. Reibungsvorrichtung (10) nach einem der vorherigen Ansprüche, **dadurch gekennzeichnet, dass** es möglich ist auf jeder Verbindungslasche (22, 24) des Trägers (16, 18) einen Winkelsektor (A) zu definieren, dessen Scheitelpunkt in etwa mit dem zweiten Befestigungsende (22B, 24B) dieser Lasche (22, 24) zusammenfällt, und der sich ohne Materialunterbrechung bis zu einer äußeren Kontur des Trägers (16, 18) erstreckt, wobei der Winkelsektor einen Winkel zwischen 10° und 35° bildet und wobei eine Achse, die senkrecht zu einem durch die Mitte der Vorrichtung gehenden Radius verläuft, in dem besagten Winkelsektor enthalten ist.

7. Reibungsvorrichtung (10) nach einem der vorherigen Ansprüche, **dadurch gekennzeichnet, dass** das zweite Reibbelagorgan (12) eine allgemein ringförmige Form hat und Verbindungslaschen (24) umfasst, die jeweils mit einem ersten Ende (24A) zur Befestigung an einer inneren Kontur dieses zweiten Reibbelagorgans (12) und mit einem zweiten Ende (24B) zur Befestigung an dem zweiten Befestigungsende (22B) einer entsprechenden Verbindungslasche des ersten Reibbelagorgans (11) versehen sind, wobei die ersten (24A) und zweiten (24B) Befestigungsenden der Verbindungslaschen (24) des zweiten Reibbelagorgans (12) zwischen sich einen Winkelversatz aufweisen.

8. Reibungsvorrichtung (10) nach einem der vorherigen Ansprüche, **dadurch gekennzeichnet, dass** sie elastische Mittel (19) zum axialen Abstützen der ersten (11) und zweiten (12) Reibbelagorgane aufweist.

9. Reibungsvorrichtung (10) nach Anspruch 8, **dadurch gekennzeichnet, dass** die elastischen Abstützmittel (19) eine Elastomermasse (20) mit vorzugsweise einer allgemeinen Ringform umfassen, die zwischen den ersten (11) und zweiten (12) Reibbelagorganen angeordnet ist.

10. Reibungsvorrichtung (10) nach Anspruch 8, **dadurch gekennzeichnet, dass** die elastischen Abstützmittel (19) elastische Abstützlaschen (28) umfassen, die jeweils mit einem ersten Ende (28A) zur Verbindung mit einem der Reibbelagorgane (11) und mit einem freien zweiten Ende (28B) zum Kontakt mit dem anderen der Reibbelagorgane (12) versehen sind, wobei diese Abstützlaschen (28) derart gebogen sind, dass ihre ersten (28A) und zweiten (28B) Enden axial zueinander versetzt sind.

11. Reibungsvorrichtung (10) nach Anspruch 10, **dadurch gekennzeichnet, dass** die elastischen Abstützlaschen (28) mit einem einzigen der Reibbelagorgane (11) verbunden sind, welches einen Belag trägt, der dazu bestimmt ist, vorzugsweise mit einer axial beweglichen Druckplatte zusammenzuwirken.

12. Reibungsvorrichtung (10) nach Anspruch 10 oder 11, **dadurch gekennzeichnet, dass** sie mindestens zwei Abstützlaschen (28) umfasst, die verschiedene axiale Versatze zwischen ihren ersten (28A) und zweiten (28B) Enden aufweisen.

13. Reibungsvorrichtung (10) nach Anspruch 10 oder 11, **dadurch gekennzeichnet, dass** sie mindestens zwei Abstützlaschen (28) umfasst, die verschiedene Steifheiten aufweisen.

14. Reibungsvorrichtung (10) nach Anspruch 10, **dadurch gekennzeichnet, dass** sie mindestens zwei als Laschenpaar bezeichnete Abstützlaschen (28, 30) umfasst, die jeweils mit dem ersten (11) oder zweiten (12) Reibbelagorgan verbunden sind.

15. Reibungsvorrichtung (10) nach Anspruch 14, **dadurch gekennzeichnet, dass** die Abstützlaschen des Laschenpaars (28, 30) in etwa symmetrisch zu einer parallel zum ersten (11) und zweiten (12) Reibbelagorgan verlaufenden Ebene sind.

16. Reibungsvorrichtung (10) nach Anspruch 14, **dadurch gekennzeichnet, dass** die Abstützlaschen des Laschenpaars (28, 30) in etwa symmetrisch zu einem Punkt sind.

17. Reibungsvorrichtung (10) nach Anspruch 16, **dadurch gekennzeichnet, dass** der Symmetriepunkt ein Kontaktpunkt zwischen den Abstützlaschen des Laschenpaars (28, 30) ist.

18. Reibungsvorrichtung (10) nach Anspruch 14, **dadurch gekennzeichnet, dass** die Abstützlaschen des Laschenpaars (28, 30) mit Kontaktflächen (28C, 30C) zwischen sich versehen sind, wobei die Kontaktfläche eines Laschenpaars (28, 30) dem Reibbelagorgan (11, 12) gegenüberliegt, mit dem es verbunden ist.

19. Reibungsvorrichtung (10) nach Anspruch 14, **dadurch gekennzeichnet, dass** die Abstützlaschen des Laschenpaars (28, 30) mit Kontaktflächen (28C, 30C) zwischen sich versehen sind, wobei die Kontaktfläche eines Laschenpaars (28, 30) dem Reibbelagorgan (11, 12) gegenüberliegt, mit dem es nicht verbunden ist.

20. Reibungsvorrichtung (10) nach einem der Ansprüche 10 bis 19, **dadurch gekennzeichnet, dass** die Verbindungslaschen (22) und die Abstützlaschen (28) sich von ihrem ersten Ende (22A, 28A) bis zu ihrem zweiten Ende (22B, 28B) jeweils in identischen Kreisrichtungen erstrecken.

21. Reibungsvorrichtung (10) nach einem der vorherigen Ansprüche, **dadurch gekennzeichnet, dass** sie eine Vorrichtung zum Nachstellen des Verschleißes der Beläge (13, 14) umfasst.

22. Reibungsvorrichtung (10) nach einem der vorherigen Ansprüche, **dadurch gekennzeichnet, dass** der Abstand zwischen den ersten (22A; 24A) und zweiten (22B; 24B) Befestigungsenden jeder Verbindungslasche (22; 24) zwischen 5 und 60mm, vorzugsweise zwischen 20 und 40 mm liegt.

23. Reibungsvorrichtung (10) nach einem der Ansprüche 1 bis 22, **dadurch gekennzeichnet, dass** zumindest eines der Reibbelagorgane (11, 12) einen Träger (16, 18) umfasst, der einen Reibbelag (13, 14) trägt.

24. Reibungsvorrichtung (10) nach Anspruch 23, **dadurch gekennzeichnet, dass** der Reibbelag (13, 14) auf den Träger (16, 18) geklebt ist.

25. Reibungsvorrichtung (10) nach einem der Ansprüche 1 bis 22, **dadurch gekennzeichnet, dass** zumindest ein Reibbelagorgan aus einem einzigen und gleichen Stück, beispielsweise durch Spritzgießen geformt ist.

26. Reibungsvorrichtung (10) nach einem der Ansprüche 23 oder 24, **dadurch gekennzeichnet, dass** der Reibbelag (13, 14) eine allgemein ringförmige Form hat und dass das Verhältnis der radialen Breite des Belags zum äußeren Durchmesser des Belags (13, 14) kleiner als 0,10, ja sogar kleiner als 0,095 ist.
